(19) Europäisches Patentamt
European Patent Office
Office européen des brevets

(11) EP 1 260 541 A1

(12) EUROPEAN PATENT APPLICATION

(43) Date of publication:
27.11.2002 Bulletin 2002/48

(51) Int Cl.[7]: C08J 5/18, B32B 27/32, C08L 23/16

(21) Application number: 01204553.0

(22) Date of filing: 23.11.2001

(84) Designated Contracting States:
AT BE CH CY DE DK ES FI FR GB GR IE IT LI LU MC NL PT SE TR
Designated Extension States:
AL LT LV MK RO SI

(30) Priority: 21.05.2001 EP 01201920

(71) Applicant: Atofina Research S.A.
7181 Seneffe (Feluy) (BE)

(72) Inventor: Marechal, Philippe
1400 Nivelles (BE)

# (54) Polyethylene films with improved processability and optical properties

(57) Use of a homogeneous blend of LLDPE having a density of lower than 0.935g/cm$^3$ with a metallocene polyethylene (mPE) having a density of larger than 0.906 g/cm$^3$ and a Dow Rheology Index (DRI) of at least 5/$MI_2$ to produce a monolayer film or one or more layers of a multilayer film wherein said layers are arranged in any order.

EP 1 260 541 A1

## Description

The present invention relates to polyethylene compositions and films thereof with excellent processability properties, outstanding mechanical and optical properties. These polyethylene compositions can therefore be used advantageously for film applications, requiring this unique combination of properties, such as but not exclusively, food or non-food packaging, personal care products, agricultural or industrial products.

The currently available polyethylene resins all suffer from major drawbacks.

The low density polyethylene (LDPE) resins exhibit excellent optical and processing properties but they have poor mechanical properties and poor rigidity.

Linear low density polyethylene (LLDPE) resins have excellent mechanical properties but have mediocre optical properties and poor processability . Indeed LLDPE leads to bubble instability and its extrusion is difficult. If mixed with LDPE they have improved processability properties but their mechanical properties are reduced.

Metallocene-catalysed linear low density polyethylene (mLLDPE) resins have excellent mechanical properties but poor optical properties and processability requiring extrusion equipment specially designed for mLLDPE with wide die gap. If mixed with LDPE they have very good optical and good sealing properties, but the mechanical properties are reduced.

WO 95/27005 discloses mixtures of LDPE with LLDPE or mLLDPE. Those films exhibit a better haze, however the dart impact was reduced when compared to pure LLDPE or mLLDPE films.

EP-A-0844277 discloses polyethylene compositions for films that achieve the optical properties of non metallocene LDPE and the mechanical and processing properties of metallocene catalysed medium density polyethylene (mMDPE). However there is still a need to improve the optical properties of such resins.

Easy processing metallocene polyethylene resins are described in Antec 1998, pp.1816-1819. Those metallocene resins exhibit a unique combination of easy processing and outstanding toughness when compared with mixtures of conventional polyethylene.

It is an object of the present invention to provide polyethylene blends for mono or multilayer films that achieve high tear resistance in machine direction, excellent optics, a good processability and a good bubble stability in the film blowing process.

In the present invention, the processability of the polyethylene blends converted into films is defined by the possibility to extrude the film on machines equiped with narrow die gap.

In the present invention, the bubble stability of the polyethylene blends converted into films by the bubble technique is defined as a bubble which is particularly stable regarding wind sensitivity e.g. air motions in the extrusion room. The stability of the bubble is also defined as a bubble whose shape remains constant and whose risk of breaking during the film blowing process is weak. The bubble stability of the resins is further defined by the capacity to produce films with high draw down potential. The draw down potential indicates how thin the film can be drawn.

In the present invention, a film is defined as an extremely thin continuous sheet: the upper limit for thickness is of about 250 microns (Hawley's Condensed Chemical Dictionary, Twelfth Edition, Rev. by R.J.Lewis, Van Nostrand Reinhold Co., New York)

This present invention relates to the use of a homogeneous blend of LLDPE having a density of lower than 0.935g/cm$^3$ with a metallocene polyethylene (mPE) having a density of larger than 0.906 g/cm$^3$ and a Dow Rheology Index (DRI) of at least 5/MI$_2$ to produce a monolayer film or one or more layers of a multilayer film wherein said layers are arranged in any order.

In this specification, the density of the polyethylene is measured at 23 °C using procedures of ASTM D 1505.

The densities of the mPE used in the present invention are regulated by the amount of comonomer injected in the reactor; they will range from 0.906 g/cm$^3$ to less than 0.965 g/cm$^3$, preferably from 0.910 g/cm$^3$ to less than 0.965 g/cm$^3$ , more preferably from 0.925 g/cm$^3$ to less than 0.965 g/cm$^3$ yet more preferably from 0.925 g/cm$^3$ to less than 0.950 g/cm$^3$. Examples of comonomer which can be used include 1-olefins propylene, butene, hexene, octene, 4-methyl-pentene, and the like, as well as mixtures thereof up to C12 olefins, the most preferred being hexene. Homopolymers of ethylene may also be used.

The density of the LLDPE ranges from 0.910 g/cm$^3$ to less than 0.935 g/cm$^3$.

The melt indices of the mPE used in the present invention can be regulated by the amount of hydrogen injected in the reactor; they will range from 0.01 g/10' to 1000 g/10', preferably from 0.05 9/10' to 40 g/10', most preferably from 0.2 to 7 g/10'.

The molecular weight distribution defined as the ratio between the average molecular weight (Mw) and the average molecular weight by number (Mn) of the mPE used in the present invention is of from 2 to 8, preferably of from 2 to 4 and even more preferably from 2 to 3.5.

The mPE resin used in the present invention has a high Dow Rheological Index (DRI). To characterize the rheological behavior of substantially linear ethylene polymers, S Lai and G.W. Knight introduced a new rheological measurement, the Dow Rheology Index (DRI) which expresses a polymer's "normalized relaxation time as the result

of long chain branching" ( ANTEC '93 Proceedings, Insite™ Technology Polyolefins (ITP)-New Rules in the Structure/ Rheology Relationship of Ethylene &-Olefin Copolymers, New Orleans, La., May 1993). S.Lai et al defined the DRI as the extent that the rheology of ethylene-octene copolymers known as ITP ( Dow's Insite Technology Polyolefins) incorporating long chain branching into the polymer backbone deviates from the rheology of the conventional linear homogeneous polyolefins that are reported to have no Long Chain Branching by the following normalized equation:

$$DRI = (365000\ (t_0/\eta_0)-1)/10$$

wherein $t_0$ is the characteristic relaxation time of the material and $\eta_0$ is the zero shear viscosity of the material ( Antec '94, Dow Rheology Index (DRI) for Insite™ Technology Polyolefins (ITP): Unique structure-Processing Relationships, pp. 1814-1815). The DRI is calculated from the best fitting by least squares analysis of the rheological curve (complex viscosity versus frequency) as described in US-A-6114486 with the following generalized Cross equation, i.e.

$$\eta = \eta_0/(1 + (\gamma\ t_0)^n)$$

wherein n is the power law index of the material, $\eta$ and $\gamma$ are the measured viscosity and shear rate data respectively. The dynamic rheological analysis is performed at 190°C and the strain amplitude is 10%. Results are reported according to ASTM D 4440.

The DRI of the mPE used in the present invention is at least 5/MI2, preferably at least 15/MI2, more preferably at least 20/MI2, most preferably at least 25/MI2, yet most preferably at least 30/MI2.

Without being bound by a theory, it has been observed that when the dynamic rheological analysis is performed at a temperature lower than 190°C, higher DRI values can be obtained compared to those obtained when the dynamic rheological analysis is performed at a temperature of 190°C and vice versa.

DRI values ranging from zero for polymers which do not have measurable long chain branching to about 15 are known and have been desribed in several U.S. patents such as for example US-A-6114486, US-A-5674342, US-A-5631069.

The manufacture of the low density and linear low density polyethylenes used in the present invention is known in the art and is described for example in "Encyclopedia of Polymer Science and Engineering", second edition, Volume 6, on pages 404 to 410 (LDPE) and pages 436 to 444 (LLDPE).

The catalyst system used in the present invention to manufacture mPE comprises a metallocene component. The metallocene component can be any metallocene component known in the art of the general formula:

I. $(Cp)_mMR_nX_q$
wherein Cp is a cyclopentadienyl ring, M is a group 4b, 5b or 6b transition metal, R is a hydrocarbyl group or hydrocarboxy having from 1 to 20 carbon atoms, X is a halogen, and m=1-3, n=0-3, q=0-3 and the sum m+n+q is equal to the oxidation state of the metal.

II. $(C_5R'_k)_gR''_s(C_5R'_k)MQ_{3-g}$

III. $R''_s(C_5R'_k)_2MQ'$
wherein $(C_5R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring, R" is a $C_1$-$C_4$ alkylene radical, a dialkyl germanium or silicon or siloxane, or a alkyl phosphine or amine radical bridging two $(C_5R'_k)$ rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

Among the preferred metallocenes used in the present invention, one can cite among others bis tetrahydroindenyl compounds and bis indenyl compounds as disclosed for example in WO 96/35729. The most preferred metallocene catalyst is ethylene bis (4,5,6,7-tetrahydro-1-indenyl) zirconium dichloride.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

An active side must be created by adding a cocatalyst having an ionizing action. While alumoxane can be used as cocatalyst, it is not necessary to use alumoxane as cocatalyst during the polymerization procedure for preparing the mPE resin. When alumoxane is used as a cocatalyst, any alumoxane known in the art can be used. The preferred alumoxanes comprise oligomeric linear and/or cyclic alkyl alumoxanes represented by the formula:

(I) 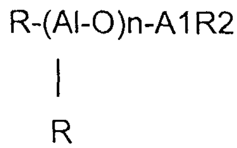

for oligomeric, linear alumoxanes and

(II) 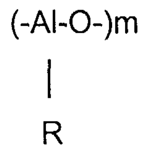

for oligomeric, cyclic alumoxanes,
wherein n is 1-40, preferably 10-20, m is 3-40, preferably 3-20 and R is a C1-C8 alkyl group and preferably methyl.

Methylalumoxane is preferably used.

When alumoxane is not used as a cocatalyst , one or more aluminium alkyl. represented by the formula $AIR_X$ are used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

In the present invention, the mPE is monomodal or bimodal or multimodal.

The metallocene catalyst utilized to produce the polyethylene required by the present invention can be used in gas, solution or slurry polymerizations. Preferably, in the present invention, the polymerization process is conducted under slurry phase polymerization conditions. It is preferred that the slurry phase polymerization conditions comprise a temperature of from 20 to 125°C, preferably from 60 to 110°C and a pressure of from 0.1 to 8 MPa, preferably from 2 to 5 MPa for a time between 10 minutes and 4 hours, preferably between 0.4 and 2.5 hours.

It is preferred that the polymerization reaction be run in a diluent at a temperature at which the polymer remains as a suspended solid in the diluent. Diluents include, for examples, propane, isobutane, n-hexane, n-heptane, methylcyclohexane, n-pentane, n-butane, n-decane, cyclohexane and the like as well as mixtures thereof. The preferred diluent is isobutane. The diluent can be under liquid or super critical state.

According to a preferred embodiment of the present invention, a continuous reactor is used for conducting the polymerization. This continuous reactor is preferably a loop reactor. During the polymerization process, at least one monomer, the catalytic system and a diluent are flowed in admixture through the reactor.

Alternatively for a bimodal production of mPE two reactors in series can be used.

In the present invention average molecular weights can be further controlled by the introduction of some amount of hydrogen or by changing the temperature during polymerization. When hydrogen is used it is preferred that the relative amounts of hydrogen and olefin introduced into the polymerization reactor be within the range of about 0.001 to 15 mole percent hydrogen and 99.999 to 85 mole percent olefin based on total hydrogen and olefin present, preferably about 0.02 to 3 mole percent hydrogen and 99.98 to 97 mole percent olefin.

Standard additives such as antioxidants may be used for both long term and processing stabilization and if desired, one or more pigments and/or dyes and/or processing aids like fluoro elastomers can also be added.

Antistatic, antifog, antiblocking or slip additives may also be added.

The present invention further provides mono or multilayer films prepared with the homogeneous blend of LLDPE having a density of lower than 0.935 $g/cm^3$ with a mPE having a density larger than 0.906 g/cm3 characterized by outstanding optical properties, mechanical properties and processability in the film blowing.

The present invention further provides films prepared with the homogeneous blend, with outstanding optical properties characterized by a gloss of at least 60 and a haze below 4% for a film thickness of 25 µm or a gloss of at least 65, preferably at least 70 and a haze below 5% for a film thickness of 40 µm.

The mPE catalysed by the procedure described hereabove are used in blends with Ziegler Natta or metallocene catalysed LLDPE in various ratios.

In one preferred embodiment, the mPE are used in blends with mLLDPE in various ratios.

According to embodiments of the present invention, resins of LLDPE with mPE are obtained either by preliminary dry blend or extrusion or by direct blend in the hopper or via a side extruder.

Materials are run under production conditions for existing commercial applications where processability, downgauging, rigidity, good optics and excellent outputs are key issues.

Generally, the blends of the present invention comprise from 0.5 % to 99.5% by weight of mPE having a density larger than 0.906g/cm$^3$ and a DRI of at least 5/$MI_2$ and from 99.5% to 0.5% by weight of LLDPE, having a density lower than 0.935g/cm$^3$, based on the total weight of the blend. Preferably the blend of the present invention comprises at least 10 % by weight of mPE having a DRI of at least 5/$MI_2$ and from 90 % to 0.5% by weight of LLDPE based on the total weight of the blend, more preferably at least 20 % by weight of mPE having a DRI of at least 5/$MI_2$ and from 80 % to 0.5% by weight of LLDPE .

Other polymers compatible with said blends can be added to the blends to a total amount not to exceed 33% by weight based on the total weight of the polymers.

In another preferred embodiment, the mPE has a density of from 0.925g/cm$^3$ to less than 0.965 g/cm$^3$ and is used in blends with mLLDPE in various ratios.

The films prepared according to this embodiment combine good tear resistance in machine direction (MD) and improved rigidity allowing downgauging opportunities. Those mPE/mLLDPE resins are also easy to process. In particular, they present low extrusion pressure, good bubble stability and high extrusion output.

The blends described here above may also be used in the production of lamination films, barrier films. These films may also be metallized, corona treated, reticulated under radiations, printed and laminated.

<u>EXAMPLES:</u>

1. Polymerization procedure and product composition.

Two resins have been prepared. The polymerization of Resin R1 of the present invention was carried out in a liquid-full slurry loop reactor. Ethylene was injected with 1-hexene together with the catalyst. Isobutane was used as diluent.

Resin R2 was produced following the same procedure as resin R1 but the conditions were modified to produce a resin of lower density.

The polymerization conditions are indicated in Table 1

TABLE I

| | Resin R1 | Resin R2 |
|---|---|---|
| C2 feed (kg/h) | 3900 | 11320 |
| C6 feed | 22 (g/kg C2) | 1643 (kg/h) |
| H2 feed | 42 (g/t) | 521 (g/h) |
| Iso C4 feed (kg/h) | 1940 | 15757 |
| Tibal conc (ppm) | 100-200 | 100 |
| Tpol (°C) | 90 | 79.4 |

C2 = ethylene
C6 = 1-hexene
Iso C4 = isobutane
TIBAL = triisobutylaluminium

The bridged metallocene catalyst used was ethylene bis (tetrahydro-indenyl) zirconium dichloride

The data concerning resin R1 and R2 are summarised in Table II.

TABLE II.

| | R1 | R2 |
|---|---|---|
| Density g/cm$^3$ | 0.934 | 0.923 |
| MI2 g/10 min | 0.9 | 1 |
| DRI | 36 | 58 |
| SR2=HLMI/MI2 | 30 | 33 |

The DRI of R1 was determined by fitting the generalized Cross equation on the complex viscosity measured according to ASTM D4440 by using a RDA 700 from Rheometrics, a diameter plate-plate of 25 mm and a gap between plates of 2 mm +/- 0.2 mm. The apparatus was calibrated according to ARES Instrument normal 902-30004 . The rheological measurements were performed at 190°C under nitrogen and at 10% of strain.

2. Blends preparation.

A blend B1 according to the invention was prepared by mixing 30% by weight of resin R1 and 70% by weight of LLDPE.

A comparison blend B2 was prepared by mixing 30% by weight of LDPE and 70% by weight of LLDPE.

A blend B3 according to the invention was prepared by mixing 30% by weight of resin R2 and 70% by weight of mLLDPE.

A comparison blend B4 was prepared by mixing 97% by weight of mLLDPE and 3% by weight of LDPE.

3. Films preparation.

Film F1 was prepared from the blend B1. It was blown on a Macchi line using a low density configuration characterised by a die of 120 mm, a blow up ratio (BUR) of 2.5:1 and a die gap of 2.2 mm. Film F1 was down-gauged to a thickness of 40 microns.

Film F2 used for comparison was prepared from blend B2 on the same Macchi line as used for F1. The film was down-gauged to a thickness of 40 microns.

Film F3 was prepared from the blend B3. It was blown on a Macchi line using a standard configuration characterised by a blow up ratio (BUR) of 2.5:1.

Film F3 was down-gauged to a thickness of 25 microns.

Film F4 used for comparison was prepared from blend B4 on the same Macchi line as used for F3. The film was down-gauged to a thickness of 25 microns.

Film F5 used for comparison was prepared from pure LLDPE on the same Macchi line as used for F1 and F2. The film was down-gauged to a thickness of 40 microns.

Film F6 used for comparison was prepared from pure mLLDPE on the same Macchi line as used for F3 and F4. The film was down-gauged to a thickness of 25 microns.

*The resin R1 (mMDPE) was then blended with a LLDPE in the proportions of 30 % by weight of resin R1 (mMDPE) and 70 % by weight of LLDPE .

*A comparison blend was prepared by mixing 30 % by weight of LDPE and 70 % by weight of LLDPE.

Two films were blown on a Macchi blown film line equipment using a low density configuration characterised by a die of 120 mm, a BUR of 2.5:1 and a die gap of 2.2 mm. Both films were down-gauged to a thickness of 40 microns.

A third film was prepared from pure LLDPE similarly as for the previous films mMDPE/LLDPE and LDPE/LLDPE hereabove.

LDPE is a commercial resin sold by Atofina known under the trade mark Lacqtene$^R$ characterized by a density of 0.924 g/cm3.

LLDPE is a commercial resin sold by Polimeri known under the trade mark Clearflex$^R$. It is prepared with a Ziegler-Natta catalyst and characterized by a density of 0.918 g/cm3.

mLLDPE is a conventional resin sold from Basell known under the trade mark Luflexene® having a DRI of 0 and characterized by a density of 0.918 g/cm3.

4. Film properties.

The films F1, F2 and F5 were tested for tear properties (Elmendorf) in machine direction (MD) and in transverse direction (TD) as well as for impact properties (Dart), yield stress, and secant modulus. Their properties are given in Table I.

The Elmendorf tear was measured using the method of ASTM D -1922.
The dart impact was measured according to the method of ASTM D -1709
The stress at yield was measured according to the method of ASTM D - 882 with a traction speed of 500 mm/min and a sample length of 5 cm.
The secant modulus at 1% was measured according to the method of ASTM D-882 with a traction speed of 5 mm/min and a sample length of 25 cm.

Table 1

| | Example | Comparative | |
|---|---|---|---|
| | F1<br>R1/LLDPE<br>30%/70% | F2<br>LDPE/LLDP<br>E30%/70% | F5<br>LLDPE<br>100% |
| Density (g/cm$^3$) | 0.922 | 0.918 | 0.918 |
| Dart impact (g) | 120 | 120 | 281 |
| Elmendorf Tear MD (N/mm) | 121 | 81 | 162 |
| Elmendorf Tear TD (N/mm) | 223 | 220.5 | 210 |
| Yield stress (MPa) | 15 | 12.7 | 12.7 |
| Secant modulus at 1% (MPa) | 260 | 200 | 200 |

As known pure LLDPE offers excellent dart and tear properties.
It can been seen from table I that the Elmendorf tear for the film F1 prepared according to the blend of the present invention is significantly better in the machine direction than for the comparative film F2. Regarding the Elmendorf tear in the transverse direction, there is no difference between both films.
Table 1 illustrates also that the yield stress and the secant modulus at 1% of the film F1 is increased compared to the film F2. The films produced from the blend accoording to the invention will have a better rigidity than those produced from the comparative blends which will allow draw down possibilities.
Besides those improved properties, the addition of mPE to LLDPE allows also an easier processing as shown by table 2. Using the extrusion pressure as measurement for processability, it is clearly shown that addition of mPE to LLDPE decreases the extrusion pressure. The most important decreasing of the extrusion pressure is obtained with low amounts of mPE, between 1 and 20%.

Table 2

| % mPE (R1) | % LLDPE | Extrusion Pressure (bars) |
|---|---|---|
| 0 | 100 | 324 |
| 30 | 70 | 303 |
| 70 | 30 | 296 |
| 100 | - | 284 |

It has also been observed that the addition of mPE (R1) to LLDPE provides a better stability to the bubble than pure LLDPE.
Table 3 shows the extrusion behaviour of a the blend B1 according to the invention compared to the blend B2 and pure LLDPE when extruded on LLDPE machine (characterised by a die land/die gap ratio of 5:1), on a standard machine (characterised by a die land/die gap ratio of 10-20:1) and on a LDPE machine (characterised by a die land/ die gap ratio of 30:1).
The bubble stability of the resin is measured in terms of the bubble wind sensitivity to air motions in the extrusion room.
Further the bubble stability of the resin is also measured in terms of bubble dancing indicating how the frost line height (FLH) moves up and down and how stable is the bubble shape below the frost line height. The diameter of the inflated resin bubble has also been measured. The diameter of the bubble, in centimeters (cm) is measured at a distance of about one third of frost line height from the die.
The frost line is defined as the line formed on the bubble due to the crystallization of the resin occuring during its cooling process. The height of the frost line, in centimetres (cm), is measured from the die.
The bubble stability is also measured in terms of risk of break of the bubble during the blowing process and when reaching the limited draw down of the resin.

The draw down potential indicates how thin the film can be drawn.

Table 3

| | B1 (example) | Comparative | B2 (comparative) |
|---|---|---|---|
| Processing criteria | R1 (30%)<br>LLDPE (70%) | LLDPE (100%) | LDPE (30%)<br>LLDPE (70%) |
| Extrusion pressure (bar) | 300 | 330 | 320 |
| **Extrusion on LLDPE machine** | | | |
| Wind sensitivity | No significant change of bubble shape when entering the extrusion room | Bubble moving when entering the extrusion room | No significant change of bubble shape when entering the extrusion room |
| Bubble dancing | FLH moving up and-down by 5cm<br>Diameter changing periodically by +/- 1 cm | FLH moving up and down by 10 cm<br>Diameter changing periodically by +/- 2 cm | FLH moving up and down by 5 cm<br>Diameter changing periodically by +/- 1 cm |
| Risk of break | No break | Three breaks when transiting to pure LLDPE | No break |
| Draw down potential as thinnest film thickness | < 5 μm | 10 μm | Break at 9 μm |
| **Extrusion on standard machine** | | | |
| Wind sensitivity | No significant change of bubble shape when entering the extrusion room | | No significant change of bubble shape when entering the extrusion room |
| Bubble dancing | FLH moving up and-down by 10 cm<br>Diameter changing periodically by +/- 2 cm | | FLH moving up and down by 10 cm<br>Diameter changing periodically by +/- 2 cm |
| Risk of break | No break experienced | | Break at 5.5 μm |
| Draw down potential | < 5 μm | | Break at 5.5 μm |
| **Extrusion on LDPE machine** | | | |
| Wind sensitivity | No significant change of bubble shape when entering the extrusion room | | No significant change of bubble shape when entering the extrusion room |
| Bubble dancing | FLH moving up and down by 15 cm<br>Diameter changing periodically by +/- 3 cm | | FLH moving up and down by 15 cm<br>Diameter changing periodically by +/- 3 cm |

Table 3 shows that the bubble stability of the blend B1 according to the invention in terms of wind sensitivity, bubble dancing, risk of break is as good as the bubble stability of the comparative blend B2 when the resin is extruded either on LLDPE machine, or on standard machine or on LDPE machine. The blend B1 has a better draw down potential compared to a blend B2 when extruded on LLDPE and on standard machines.

Those results confirm that the blend according to the invention may be extruded at lower extrusion pressure either on a LLDPE or a standard or a LDPE machine with an outstanding bubble stability which allows to produce films having a draw down potential of less than 5 μm.

The improved processability properties of the blend according to the invention will allow to achieve high processing yields during film production.

It has also been observed that the films produced from the blends according to the present invention improve

seal strength as compared to films produced from blends of LDPE/LLDPE and pure LLDPE.

Film F1 was heat sealed onto itself and the seal strength was investigated using varying sealing temperature in comparison with a forty micron thick blown film (F7) of a 25 wt% LDPE / 75% LLDPE blend and in comparison of a forty micron type blown film of pure LLDPE (F5). The films were heat sealed for a period of 1 second under a force of 0.3N/$mm^2$. The strength of the seals was then measured according to ASTM D-882 with a traction speed of 200 mm/min and a sample length of 5 cm.

The results are shown in table 4.

Table 4

| | F1 (example) | F5 (comparative) | F7 (comparative) |
|---|---|---|---|
| | R1/LLDPE 30%/70% | LLDPE 100% | LDPE/LLDPE 25%/75% |
| Sealing temperature (°C) | Strength of seal (Mpa) | Strength of seal (Mpa) | strength of seal (Mpa) |
| 110 | 0 | 0 | 0 |
| 115 | 1.5 | 7.9 | 7.2 |
| 120 | 7.9 | 7.9 | 8.2 |
| 125 | 10 | 9.2 | 9.6 |
| 130 | 10.4 | 9.6 | 9.3 |
| 135 | 11.1 | 10.5 | 9.6 |
| 140 | 11.4 | 10.7 | 9.6 |

It may be seen from table 4 that at sealing temperatures of from 125°C to 140° the film F1 present an enhancement of the seal strength as compared to the comparison film F5. This provides manufacturing advantages such as shorter sealing time allowing productivity increase through a larger number of seals per unit of time or a reduced energy consumption.

The films F3 and F4 were tested for the tear properties (Elmendorf) in machine direction as well as for their optical properties and processability.

Their properties are given in Table 5.

The gloss at 45°C was measured with the Byck-Gardner micro-gloss reflectometer.
The haze was measured with the Byk-Gardner Hazegard® system.
The Elmendorf tear was measured using the method of ASTM D-1922.

Table 5

| | F3 (example) | F4 (comparative) | F6 (comparative) |
|---|---|---|---|
| | mLLDPE / mPE 70%/30% | mLLDPE / LDPE 97%/3% | mLLDPE 100% |
| Density (g/cm3) | 0.920 | 0.919 | 0.918 |
| Extrusion on die gap of | 1.4 mm | 2.2 mm | 2.2 mm |
| Gloss at 45°C | 65 | 67 | 20 |
| Haze% | 4.4 | 4.2 | 30 |
| Elmendorf Tear MD (cN) | 248 | 196 | 232 |

Table 5 illustrates that films produced from mLLDPE / mPE blends according to the invention exibit excellent optical properties. Haze and gloss are as good as those obtained with the mLLDPE / LDPE film. The film produced according to the blend of the invention exibits also outstanding mechanical properties. Indeed the tear property in machine direction is improved compared to the mLLDPE / LDPE film (F4) known to have the best commercial solution in terms of optical properties and tear resistance.

It is also observed that the blend mLLDPE/ mPE in accordance with the invention can now be easily extruded with a die gap of 1.4 mm contrary to the mLLDPE/LDPE extruded with a die gap of 2.2 mm typically used for LLDPE extrusion. This confirms that the mPE used in the blend of the invention brings stability during film blowing of the mLLDPE leading to a processability improvement of the resin.
As known, it can be seen from table 3 that the mLLDPE film (F6) offers excellent tear property in machine direction. However their optical properties (e.g. gloss and haze) remain low. Regarding the processability, the film could not be extruded with a die gap of 1.4 mm.

As known in the art when mLLDPE is blended with LDPE the films exibit improved optical properties in comparison to pure mLLDPE films. The haze is lower (4.2 versus 30 for mLLDPE) and the gloss at 45°C is higher (67 versus 20 for mLLDPE).

However the tear property in machine direction for the mLLDPE / LDPE film (F4) is lower compared to the pure mLLDPE film (196 versus 232).

It is thus observed that the blend mLLDPE / mPE according to the invention gives to the film a combination of excellent optical and mechanical properties and a good processability.

The improved processability of the mLLDPE / mPE blend of the invention will allow higher output rate of the film.

## Claims

1. Use of a homogeneous blend of LLDPE having a density of lower than 0.935g/cm$^3$ with a metallocene polyethylene (mPE) having a density of larger than 0.906 g/cm$^3$ and a Dow Rheology Index (DRI) of at least 5/$MI_2$ to produce a monolayer film or one or more layers of a multilayer film wherein said layers are arranged in any order.

2. Use according to claim 1 wherein the metallocene polyethylene has a DRI of at least 15/MI2.

3. Use according to claim 1, wherein the metallocene polyethylene has a DRI of at least 20/MI2.

4. Use according to claim 1 wherein the metallocene polyethylene has a molecular weight distribution of from 2 to 8, preferably of from 2 to 4.

5. Use according to claim 1 wherein the linear low density polyethylene is a metallocene linear low density polyethylene.

6. Use of the homogeneous blend according to claim 1 to prepare films having outstanding optical and mechanical properties.

7. Use of the homogeneous blend according to claim 1 to prepare films having a good processibility in the film blowing process.

8. Use of the homogeneous blend according to claim 1 to prepare films having a gloss of at least 60 and a haze below 4% for a film thickness of 25 µm.

European Patent Office

# EUROPEAN SEARCH REPORT

Application Number
EP 01 20 4553

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 96 12762 A (DEGROOT JACQUELYN A ;MERGENHAGEN LAURA K (US); STEWART KENNETH B () 2 May 1996 (1996-05-02) * examples 23,24,C29 * | 1-8 | C08J5/18 B32B27/32 C08L23/16 |
| D,X | WO 95 27005 A (MOBIL OIL CORP) 12 October 1995 (1995-10-12) * example 1 * | 1-8 | |
| A | US 5 674 342 A (LANGOHR MICHAEL F ET AL) 7 October 1997 (1997-10-07) * example 12 * | 1-8 | |
| X | WO 01 32771 A (CHUM PAK WING S ;DOW CHEMICAL CO (US); JAIN PRADEEP (US); OSWALD T) 10 May 2001 (2001-05-10) * examples COMP,1,2 * | 1-8 | |
| X | US 6 114 456 A (DEWART JEAN-CHRISTOPHE ET AL) 5 September 2000 (2000-09-05) * table III * | 1-8 | |

| TECHNICAL FIELDS SEARCHED (Int.Cl.7) |
|---|
| B32B |
| C08L |
| C08J |

The present search report has been drawn up for all claims

| Place of search | Date of completion of the search | Examiner |
|---|---|---|
| THE HAGUE | 3 September 2002 | Schmidt, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 20 4553

This annex lists the patent family membersrelating to the patent documents cited in the above-mentioned European search report.
The members are as contained in the European Patent Office EDP file on
The European Patent Office is in no way liable for these particulars which are merely given for the purpose of information.

03-09-2002

| Patent document cited in search report | | Publication date | Patent family member(s) | | | Publication date |
|---|---|---|---|---|---|---|
| WO 9612762 | A | 02-05-1996 | AU | 685331 | B2 | 15-01-1998 |
| | | | AU | 3947195 | A | 15-05-1996 |
| | | | BR | 9510388 | A | 23-12-1997 |
| | | | CA | 2203128 | A1 | 02-05-1996 |
| | | | CN | 1167496 | A ,B | 10-12-1997 |
| | | | EP | 0787167 | A1 | 06-08-1997 |
| | | | FI | 972169 | A | 21-05-1997 |
| | | | JP | 10507786 | T | 28-07-1998 |
| | | | JP | 3118759 | B2 | 18-12-2000 |
| | | | NO | 971819 | A | 18-06-1997 |
| | | | NZ | 295837 | A | 29-06-1999 |
| | | | RU | 2171263 | C2 | 27-07-2001 |
| | | | TW | 381098 | B | 01-02-2000 |
| | | | WO | 9612762 | A1 | 02-05-1996 |
| | | | US | 5582923 | A | 10-12-1996 |
| | | | US | 5792534 | A | 11-08-1998 |
| | | | US | 5773155 | A | 30-06-1998 |
| | | | US | 5773106 | A | 30-06-1998 |
| | | | US | 5874139 | A | 23-02-1999 |
| | | | US | 5747594 | A | 05-05-1998 |
| | | | US | 5863665 | A | 26-01-1999 |
| | | | ZA | 9508897 | A | 21-04-1997 |
| WO 9527005 | A | 12-10-1995 | AU | 686370 | B2 | 05-02-1998 |
| | | | AU | 2228795 | A | 23-10-1995 |
| | | | CA | 2180012 | A1 | 12-10-1995 |
| | | | CN | 1145082 | A | 12-03-1997 |
| | | | EP | 0753026 | A1 | 15-01-1997 |
| | | | JP | 9511273 | T | 11-11-1997 |
| | | | WO | 9527005 | A1 | 12-10-1995 |
| | | | ZA | 9502648 | A | 30-09-1996 |
| US 5674342 | A | 07-10-1997 | US | 5395471 | A | 07-03-1995 |
| | | | US | 5272236 | A | 21-12-1993 |
| | | | US | 5278272 | A | 11-01-1994 |
| | | | US | 5562958 | A | 08-10-1996 |
| | | | AT | 182511 | T | 15-08-1999 |
| | | | CA | 2165191 | A1 | 12-01-1995 |
| | | | DE | 69419757 | D1 | 02-09-1999 |
| | | | DE | 69419757 | T2 | 18-11-1999 |
| | | | EP | 0706448 | A1 | 17-04-1996 |
| | | | ES | 2135591 | T3 | 01-11-1999 |
| | | | FI | 956302 | A | 28-12-1995 |
| | | | JP | 8512002 | T | 17-12-1996 |
| | | | WO | 9501250 | A1 | 12-01-1995 |
| | | | US | 5582923 | A | 10-12-1996 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 01 20 4553

This annex lists the patent family membersrelating to the patent documents cited in the above-mentioned European search report.
The members are as contained in the European Patent Office EDP file on
The European Patent Office is in no way liable for these particulars which are merely given for the purpose of information.

03-09-2002

| Patent document cited in search report | Publication date | Patent family member(s) | Publication date |
|---|---|---|---|
| US 5674342 A | | US 5773155 A | 30-06-1998 |
| | | US 5863665 A | 26-01-1999 |
| | | CA 2120766 A1 | 29-04-1993 |
| | | DE 9219090 U1 | 25-09-1997 |
| | | DE 9219173 U1 | 25-03-1999 |
| | | DE 69220077 D1 | 03-07-1997 |
| | | DE 69220077 T2 | 20-11-1997 |
| | | DE 69228265 D1 | 04-03-1999 |
| | | DE 69228265 T2 | 02-06-1999 |
| | | EP 0608369 A1 | 03-08-1994 |
| | | EP 0783006 A2 | 09-07-1997 |
| | | EP 0899278 A2 | 03-03-1999 |
| | | EP 0899279 A2 | 03-03-1999 |
| | | ES 2103976 T3 | 01-10-1997 |
| | | ES 2127030 T3 | 01-04-1999 |
| | | FI 941727 A | 31-05-1994 |
| | | JP 2963199 B2 | 12-10-1999 |
| | | JP 7500622 T | 19-01-1995 |
| | | KR 262024 B1 | 15-07-2000 |
| | | KR 263803 B1 | 16-08-2000 |
| | | TW 448186 B | 01-08-2001 |
| | | US 5380810 A | 10-01-1995 |
| | | US 5427807 A | 27-06-1995 |
| | | WO 9308221 A2 | 29-04-1993 |
| | | US 5525695 A | 11-06-1996 |
| | | US 5783638 A | 21-07-1998 |
| | | US 5685128 A | 11-11-1997 |
| | | US 5591390 A | 07-01-1997 |
| | | US 5595705 A | 21-01-1997 |
| | | US 5852152 A | 22-12-1998 |
| | | US 5677383 A | 14-10-1997 |
| | | US 6194532 B1 | 27-02-2001 |
| | | US 6248851 B1 | 19-06-2001 |
| | | US 6140442 A | 31-10-2000 |
| | | US 5665800 A | 09-09-1997 |
| | | US 5972444 A | 26-10-1999 |
| WO 0132771 A | 10-05-2001 | AU 1451701 A | 14-05-2001 |
| | | WO 0132771 A1 | 10-05-2001 |
| US 6114456 A | 05-09-2000 | EP 0844258 A1 | 27-05-1998 |
| | | EP 0870802 A1 | 14-10-1998 |
| | | EP 0844277 A1 | 27-05-1998 |

EPO FORM P0459

For more details about this annex : see Official Journal of the European Patent Office, No. 12/82